(19)

Europäisches Patentamt
European Patent Office
Office européen des brevets

(11)  EP 1 182 876 B1

(12)  **EUROPEAN PATENT SPECIFICATION**

(45) Date of publication and mention
of the grant of the patent:
**27.06.2007 Bulletin 2007/26**

(51) Int Cl.:
*H04N 7/24* (2006.01)     *H04N 7/50* (2006.01)

(21) Application number: **01000262.4**

(22) Date of filing: **02.07.2001**

(54) **Method for video transmission over a network**

Verfahren zur Videoübertragung über ein Netzwerk

Méthode de transmission vidéo sur un réseau

(84) Designated Contracting States:
**DE FR GB**

(30) Priority: **30.06.2000 US 215457 P**

(43) Date of publication of application:
**27.02.2002 Bulletin 2002/09**

(73) Proprietor: **Texas Instruments Incorporated
Dallas, Texas 75251 (US)**

(72) Inventor: **Budgavi, Madhukar
Texas 75248, Dallas (US)**

(74) Representative: **Holt, Michael
Texas Instruments Limited
European Patents Department
800 Pavilion Drive
Northampton, NN4 7YL (GB)**

(56) References cited:
• **STUHLMUELLER K ET AL: "ANALYSIS OF VIDEO TRANSMISSION OVER LOSSY CHANNELS" IEEE JOURNAL ON SELECTED AREAS IN COMMUNICATIONS, IEEE INC. NEW YORK, US, vol. 18, no. 6, June 2000 (2000-06), pages 1012-1032, XP001149337 ISSN: 0733-8716**

• **STUHLMUELLER K ET AL: "ADAPTIVE OPTIMAL INTRA UPDATE FOR LOSSY VIDEO TRANSMISSION" PROCEEDINGS OF THE SPIE, SPIE, BELLINGHAM, VA, US, vol. 4067, 20 June 2000 (2000-06-20), pages 286-295, XP008015095 ISSN: 0277-786X**

• **FARBER N ET AL: "Analysis of error propagation in hybrid video coding with application to error resilience" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24 October 1999 (1999-10-24), pages 550-554, XP010368931 ISBN: 0-7803-5467-2**

• **RAMANUJAN R S ET AL: "Adaptive streaming of MPEG video over IP networks" LOCAL COMPUTER NETWORKS, 1997. PROCEEDINGS., 22ND ANNUAL CONFERENCE ON MINNEAPOLIS, MN, USA 2-5 NOV. 1997, LOS ALAMITOS, CA, USA,IEEE COMPUT. SOC, US, 2 November 1997 (1997-11-02), pages 398-409, XP010252445 ISBN: 0-8186-8141-1**

• **GUERRI J C ET AL: "A feedback packet-level error control for real-time applications in wireless networks" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 879-883, XP010353105 ISBN: 0-7803-5435-4**

EP 1 182 876 B1

Printed by Jouve, 75001 PARIS (FR)

**Description**

BACKGROUND OF THE INVENTION

The invention relates to electronic devices, and more particularly to video coding, transmission, and decoding/synthesis methods and circuitry.

The performance of real-time digital video systems using network transmission, such as the mobile video conferencing, has become increasingly important with current and foreseeable digital communications. Both dedicated channel and packetized-over-network transmissions benefit from compression of video signals. The widely-used motion compensation compression of video of H.263 and MPEG uses I-frames (intra frames) which are separately coded and P-frames (predicted frames) which are coded as motion vectors for macroblocks of a prior frame plus the residual difference between the motion-vector-predicted macroblocks and the actual.

Real-time video transmission over the Internet is usually done using the Real-time Transport Protocol (RTP). RTP sits on top of the User Datagram Protocol (UDP). The UDP is an unreliable protocol which does not guarantee the delivery of all the transmitted packets. Packet loss has an adverse impact on the quality of the video reconstructed at the receiver. Hence, error resilience techniques have to be adopted to mitigate the effect of packet losses. A common heuristic technique used is the frequent periodic transmission of I-frames in order to stop the propagation of errors by P-frames. That is, the motion compensation is adjusted to increase the number of I-frames and correspondingly decrease the number of P-frames.

However, this reduces the transmission rate because I-frame encoding requires many more bits than P-frame encoding.

SUMMARY OF THE INVENTION

The present invention provides a method of motion compensated video for transmission over a packetized network which trades off repeated transmission of a P-frames and the I-frame rate.

This has advantages including improved performance.

BRIEF DESCRIPTION OF THE DRAWINGS

The present invention will hereinafter be described in greater detail, by way of example only, with reference to embodiments illustrated in the figures of the accompanying drawings in which:

Figure 1 illustrates a preferred embodiment Markov chain model.
Figure 2 is a functional block diagram of a preferred embodiment encoder.
Figures 3a-3d and 4a-4d show experimental results.
Figure 5 illustrates a system.

DETAILED DESCRIPTION OF THE PREFERRED EMBODIMENTS

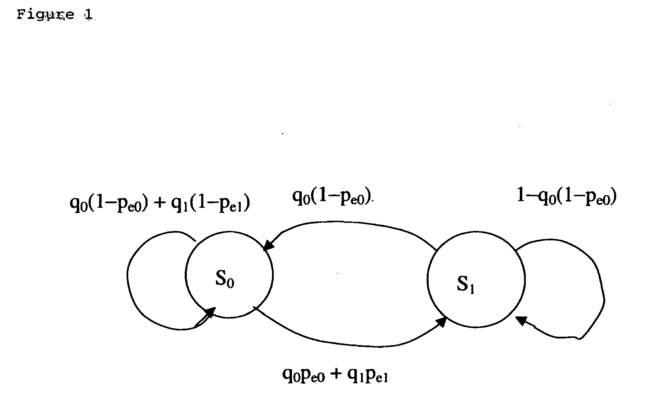

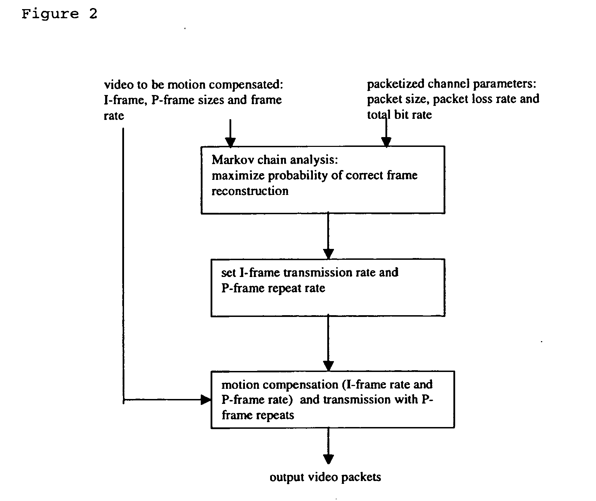

Preferred embodiment encoders and methods for motion compensated video transmission over a packetized network are illustrated generally in functional block form in Figure 2. The preferred embodiments apply a Markov chain model (illustrated in Figure 1) to control motion compensation compression by determining the rate of I-frames: a lower I-frame rate allows for repeated transmissions of P-frames as a forward error correction (FEC) method. This contrasts with the approach of increasing the I-frame rate and not repeating P-frames. In particular, the preferred embodiments maximize the probability of error-free reconstruction of frames as a function of the rate of I-frame transmission; a lower I-frame transmission rate allows for repeated transmissions of P-frames and thus increased probability of error free reception of P-frames.

Figure 1 shows a Markov model for a first preferred embodiment system having two states: $S_0$ the state when the current video frame reconstruction has no errors and $S_1$ the state when the current video frame reconstruction has at least one error. The probabilities are as follows: $q_0$ is the probability a transmitted frame is an I-frame and $q_1 = 1-q_0$ is the probability a transmitted frame is a P-frame; B-frames are ignored for this analysis. The probability a transmitted I-frame is lost is $p_{e0}$ and the probability a transmitted P-frame is lost is $p_{e1}$. Thus Figure 1 shows remaining in state $S_0$ with probability $q_0(1-p_{e0}) + q_1(1-p_{e1})$ which simply is the probability that an I-frame was transmitted and not lost plus the probability that a P-frame was transmitted and not lost. Similarly, the system remains in state $S_1$ with probability $1-q_0(1-p_{e0})$ which simply states that the only way to avoid a reconstruction error for a frame following an erroneous reconstructed frame is to receive (not lost) a transmitted I-frame because errors propagate in P-frames. Thus $q_0(1-p_{e0})$ also is the probability for transition from state $S_1$ to state $S_0$. Conversely, the probability of transition from state $S_0$ to state $S_1$ is

just the probability of losing the next frame which is simply $q_0p_{e0} + q_1p_{e1}$; that is, 1 minus the probability of remaining in state $S_0$. Thus the overall probability of being in state $S_0$ is $q_0(1-p_{e0})/(q_0 + q_1p_{e1})$ which is just the probability of an $S_1$ to $S_0$ transition divided by the sum of the probabilities of a state transition. Note that $q_0$ is equal to the reciprocal of the period (in frames) between I-frames; that is, if every nth frame is an I-frame, then the probability of a transmitted I-frame is 1/n.

Each transmitted packet over the Internet consists of compressed video data, an RTP header, and a UDP/IP header. Let v denote the number of bits in a packet header. For RTP/UDP/IP-based systems, v = 320. Because of this huge packet overhead, it is better to transmit as many source bits as possible in a single packet. The total size of the packet is limited by the maximum transmission unit (MTU) of the packet network. For Ethernet, the MTU is about 1500 bytes. Current Internet video applications use relatively low bitrates; and at low bitrates multiple P-frames can be fit into a single packet. A problem with transmitting multiple P-frames in a single packet is that the effect of packet loss becomes very severe because loss of a single packet leads to the loss of multiple P-frames. Hence, only one P-frame is transmitted in a packet. With an MTU of 1500 bytes, I-frames, however, do not fit into a single packet and have to be split across multiple packets. For ease of description, let:

$l_0$ denote the average size of an I-frame expressed in bits.
$l_1$ denote the average size of a P-frame in bits.
$n_I$ denote the number of packets required for a single I-frame.
$k_0$ denote the total number of bits (compressed bitstream plus header bits) used to transmit an I-frame, so $k_0 = l_0 + n_I v$ where v is the packet header size in bits.
$k_1$ denote the total number of bits used to transmit a P-frame.
$R_T$ denote the maximum transmission bit rate allowed.
$q_{f1}$ denote the number of times each P-frame is retransmitted.

Presume a constant frame rate of f frames per second. Then the bit rate of the source, $R_S$, can be expressed as $R_S = q_0fk_0 + q_1fk_1$ and the forward error correction bit rate, $R_F$, which adds $q_{f1}$ retransmissions of each P-frame, is $R_F = q_1q_{f1}fk_1$ with $q_{f1}$ nonnegative. Thus the total transmission rate, R, is $R = R_S + R_F = q_0fk_0 + q_1fk_1 + q_1q_{f1}fk_1$.

Let $p_e$ be the packet loss rate (assumed to be random) encountered on the Internet. Because only P-frames are retransmitted, the probability of loss of an I-frame is given by

$$p_{e0} = 1 - (1-p_e)^{nI}$$

This just means that if any of the $n_I$ packets containing a portion of an I-frame is lost, then the entire I-frame is lost. Similarly, the probability of loss of a P-frame is given by

$$p_{e1} = (1-m_1)p_e^{qf1+1} + m_1p_e^{\lceil qf1 \rceil+1}$$

where $q_{f1}$ is the largest integer not larger than $q_{f1}$, $\lceil q_{f1} \rceil$ is the smallest integer not smaller than $q_{f1}$, and $m_1$ is the fractional part of $q_{f1}$, that is, $m_1 = q_{f1} - \lfloor q_{f1} \rfloor$. Heuristically, if $q_{f1}$ were an integer, then the probability of losing all $1+q_{f1}$ packets containing a P-frame would be the probability of losing the P-frame and so $p_{e1} = P_e^{1+qf}$. For noninteger $q_{f1}$ the foregoing expression for $p_{e1}$ is just the linear interpolation between integer values bracketing $q_{f1}$.

The preferred embodiment FEC method then determines the rate of I-frame and repeated P-frame transmissions which maximizes the probability of being in state $S_0$ (=$q_0(1-p_{e0})/(q_0 + q_1p_{e1})$) given the constraint that $R \le R_T$. Note that for a given probability of I-frame transmission, $q_0$, the value of $q_{f1}$ immediately follows from taking the transmission rate $R = q_0fk_0 + q_1fk_1 + q_1q_{f1}fk_1$ equal to the maximum transmission rate, $R_T$ because f, $k_0$, and $k_1$ are fixed parameters of the system and $q_1 = 1-q_0$. Further, note that periodic transmission of I-frames implies $q_0$ is of the form 1/n where n is the period in frames between two I-frames and is an integer. Thus just evaluate the constrained probability of being in state $S_0$ for all reasonable values of n and pick the $q_0$ which maximizes the probability.

Experimental results

Two common test video sequences, "Akiyo" and "Mother and Daughter", were used to evaluate the foregoing preferred embodiment method using the Markov model. The channel packet loss rate is assumed to be $p_e$ = 10%. Whenever a frame or portion of a frame (in the case of an I-frame) is not received at the receiver, the evaluation simply copied the corresponding picture data from the previous frame. Note that because a large amount of data is lost with each packet loss, many of the more complicated error concealment techniques do not provide improved performance. The evaluation used two metrics: (i) average peak signal to noise ratio (PSNR) and (ii) fraction of frames reconstructed at the receiver that have a PSNR distortion of less than a threshold; the PSNR was obtained by averaging PSNR over 100 runs of transmitting the video bitstreams over a simulated packet loss channel, and the fraction of frames reconstructed for a distortion threshold t is denoted $d_t$.

The maximum total bitrate, $R_T$, was taken to be about 50 kb/s; and the quantization parameter was taken to be 8 for compressing the video sequences. For both video sequences, $q_0 = 1/6$ results in a bitrate around 50-55 kb/s at f = 10 frames/s; hence, the set of $q_0$s used was $q_0 = 1/6$, 1/8, ..., 1/20. Note that the source bitrate decreases as $q_0$ decreases. In the range $q_0 = 1/6$ to 1/20, $q_0 = 1/6$ corresponds t the case of maximum rate of transmission of I-frames. For each of the video sequences, eight bitstreams were generated, one for each value of $q_0$. Frame lengths $l_0$ and $l_1$ used for the Markov chain analysis were obtained by averaging the I-frame and P-frame lengths, respectively, of the compressed bitstreams; and $n_l = 3$ was used based on the I-frame size and MTU consideration.

For "Akiyo" the following list summarizes the parameters used for the Markov chain model:

$p_e = 0.1$
f = 10 frames/s
average size of I-frame, $l_0 = 20,475$ bits
average size of P-frame, $l_1 = 1,711$ bits,
$R_T = 52.89$ kb/s
$n_l = 3$
$q_0$ in set 1/6, 1/8, ..., 1/20

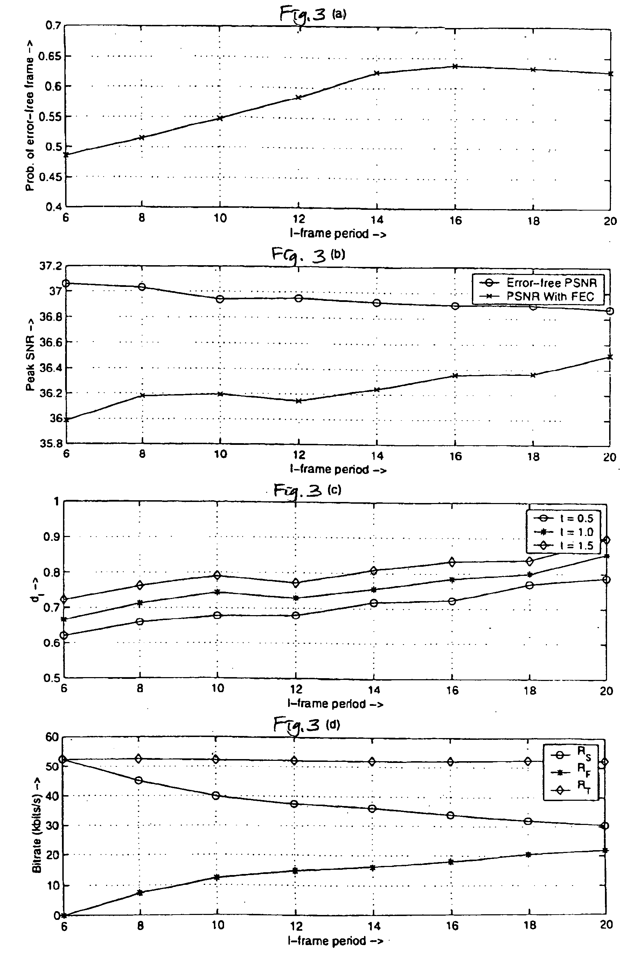

Figure 3a shows the resulting $Pr(S_0)$, the probability of being in state $S_0$, Figure 3b shows the average PSNR for various values of $q_0$, and Figure 3c shows the resulting fraction of reconstructed frames with distortion less than threshold, $d_t$. To obtain Figures 3b and 3c, the P-frame retransmission rate, $q_{f1}$, derived from the Markov chain analysis was manually tweaked so that the total bitrate (source rate + FEC rate) was very near to the source bitrate (also the total bitrate) for $q_0 = 1/6$. This was done to provide a fair comparison of results. Figure 3d shows the resulting total bitrate. In Figure 3d $R_S$ denotes the source rate, $R_F$ denotes the rate used by the FEC, and $R_T$ denotes the total bitrate.

As can be seen from Figure 3a, the Markov chain model predicts that to obtain improved performance it makes sense to decrease the frequency of I-frames (from $q_0 = 1/6$ to $q_0 = 1/14$ .. 1/20) and to instead use retransmission of P-frames. Figures 3b and 3c support this claim. There is an improvement in average PSNR in the range of 0.4-0.55 dB and fraction of reconstructed frames which have reconstruction errors less than t, with t = 0.5, 1.0, 1.5 dB, goes up by about 0.15-0.2. The $d_t$ curve of Figure 3c implies that there are about 20-25% more "good" frames when retransmission of P-frames is used instead of increasing the frequency of I-frame transmission.

For "Mother and Daughter" the following list summarizes the parameters used for the Markov chain model:

$p_e = 0.1$
f = 10 frames/s
average size of I-frame, $l_0 = 18,010$ bits
average size of P-frame, $l_1 = 2,467$ bits,
$R_T = 54.84$ kb/s
$n_l = 3$
$q_0$ in set 1/6, 1/8, ..., 1/20

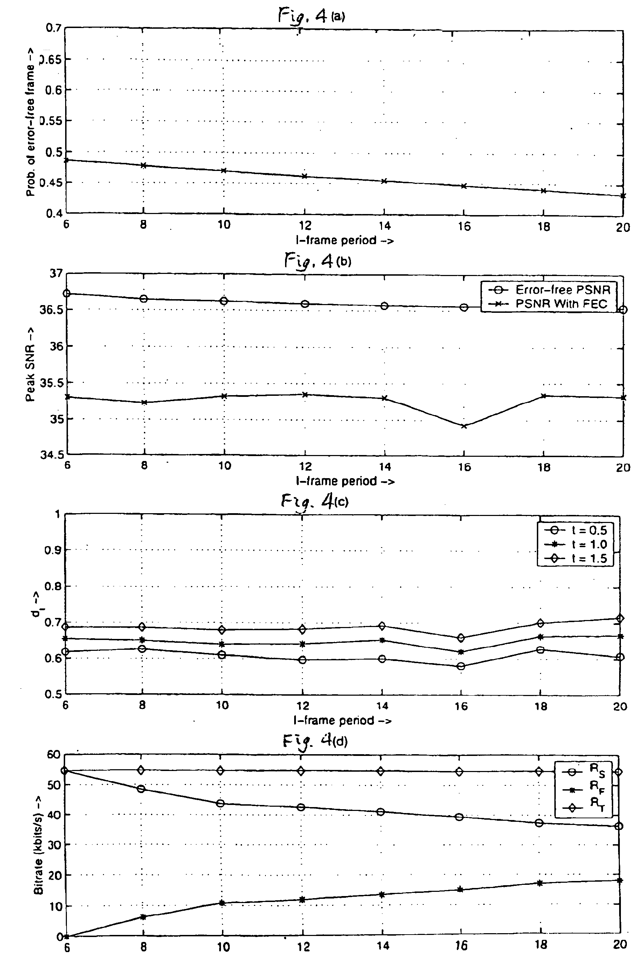

Figure 4a shows the resulting $Pr(S_0)$, Figure 4b shows the average PSNR for various values of $q_0$, and Figure 4c shows the resulting $d_t$. To obtain Figures 4b and 4c, the P-frame retransmission rate, $q_{f1}$, derived from the Markov chain analysis again was manually tweaked so that the total bitrate was very near to the source bitrate (also the total bitrate) for $q_0 = 1/6$. This was done to provide a fair comparison of results. Figure 4d shows the resulting total bitrate. In Figure 4d $R_S$ denotes the source rate, $R_F$ denotes the rate used by the FEC, and $R_T$ denotes the total bitrate.

The Markov chain analysis in this case predicts that a gain in performance cannot be achieved by decreasing the frequency of I-frames; see Figure 4a. The PSNR and the $d_t$ curves of Figure 4b and 4c support this claim. The PSNR and the $d_t$ curves remain more or less flat. Note that the PSNR and the $d_t$ curves do not move down like the $Pr(S_0)$ curve of Figure 4a. This can be attributed to the fact that the Markov chain model is a very simplistic model and is not based on the PSNR metric. More complex models can be thought of for modeling the PSNR performance, but they become complicated because of hte use of motion compensation in the decoder.

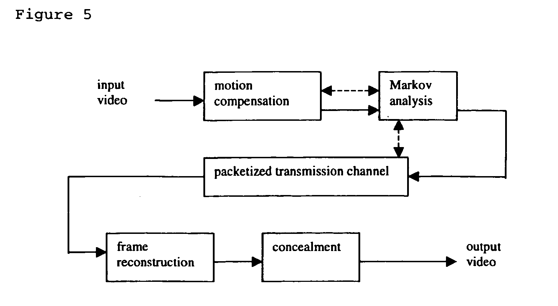

Figure 5 shows in functional block form a portion of a preferred embodiment system which uses a preferred embodiment motion-compensated video transmission method. Such systems include video phone communication over the Internet with wireless links at the ends and voice packets interspersed with the video packets; a two-way communi-cation version would have the structure of Figure 5 for both directions. In preferred embodiment communi-cation systems users (transmitters and/or receivers) hardware could include one or more digital signal processors (DSP's) and/or other programmable devices such as RISC processors with stored programs for performance of the signal processing of a preferred embodiment method. Alternatively, specialized circuitry (ASIC's) could be used with (partially) hardwired preferred embodiments methods. Users may also contain analog and/or mixed-signal integrated circuits for amplification or filtering of inputs to or outputs from a communications channel and for conversion between analog and digital. Such analog and digital circuits may be integrated on a single die. The stored programs, including codebooks, may, for example, be in ROM or flash EEPROM or FeRAM which is integrated with the processor or external to the processor. Antennas may be parts of receivers with multiple finger RAKE detectors for air interface to networks such as the Internet. Exemplary DSP cores could be in the TMS320C6xxx and TMS320C5xxx families from Texas Instruments.

The preferred embodiments may be modified in various ways while retaining one or more of the features of optimization of I-frame rate in view of repeated P-frame transmission possibilities.

For example, the predictively-coded frames could include B-frames; the frame playout could include a large buffer and delay to allow from some automatic repeat request for I-frame packets to supersede some repeat P-frame packets; the network protocols could differ.

Indeed, one can introduce the concept of using multiple servers to serve the same video receiving client. For example, presume the use of two video servers to serve the same client. This situation has two network channels feeding into the video client. Use one channel to transmit the I-frame and P-frame (without repetition) and then use the other channel to transmit the FEC P-frames. Note that the rate of video received at the client is the same as when a single server is used. Use of two channels improves the performance, because the probability of both the channels deteriorating at the same time decreases.

**Claims**

1.  A method of video coding for packetized transmission, comprising:

    (a) assessing a packet loss rate in a transmission channel;
    (b) assessing the average amount of data of intra-coded frames and predictively-coded frames for input video with a frame rate;
    (c) computing a proportion of frames which are to be intracoded, as compared to predictive coded frames by maximizing a probability of correct frame reconstruction using the results of steps (a) and (b) plus a maximum transmission bit rate, wherein said probability of correct frame reconstruction includes a rate of repeated transmission of predictively-coded frames determined using said frame rate plus said maximum transmission bit rate.
    (d) coding the input video according to parameters obtained in former steps (a), (b) and (c).

2.  The method of claim 1, wherein:

    (a) said transmission channel is the Internet; and
    (b) said predictively-coded frames are P-frames.

3.  The method of claim 1 or 2, wherein:

    (a) said probability is taken as $q_0(1-p_{e0})/(q_0 + q_1 p_{e1})$ where $q_0$ is the probability of an intra-coded frame, $q_1$ is the probability of a predictively-coded frame, $p_{e0}$ is the probability of a transmitted intra-coded frame being lost, and $p_{e1}$ is the probability of a transmitted predictively-coded frame being lost.

4.  A video coding controller for packetized transmission, comprising:

    (a) a first input for receiving packet loss rate data for a transmission channel;
    (b) a second input for receiving video parameters, said video parameters comprising the average amount of data of intra-coded frames and predictively-coded frames for input video with a frame rate; and
    (c) a probability maximizer, coupled to said first and second inputs, for computing a proportion of frames which are to be intracoded, as compared to predictive coded frames by maximizing a probability of correct frame reconstruction using said first and second inputs plus a maximum transmission bit rate, wherein said probability of correct frame reconstruction includes a rate of repeated transmission of predictively-coded frames determined using said frame rate plus said maximum transmission bit rate.

**Patentansprüche**

1. Verfahren zur Videocodierung für eine paketweise Übertragung, das umfasst:

   (a) Einschätzen einer Paketverlustrate in einem Übertragungskanal;
   (b) Einschätzen der durchschnittlichen Datenmenge intracodierter Rahmen und prädiktiv codierter Rahmen für Eingangsvideodaten mit einer Rahmenrate;
   (c) Berechnen eines Anteils von Rahmen, die intracodiert werden sollen, im Vergleich zu prädiktiv codierten Rahmen durch Maximieren einer Wahrscheinlichkeit einer korrekten Rahmenrekonstruktion unter Verwendung der Ergebnisse der Schritte (a) und (b) plus einer maximalen Übertragungsbitrate, wobei die Wahrscheinlichkeit einer korrekten Rahmenrekonstruktion eine Rate einer wiederholten Übertragung prädiktiv codierter Rahmen, die unter Verwendung der Rahmenrate plus der maximalen Übertragungsbitrate bestimmt wird, enthält; und
   (d) Codieren der Eingangsvideodaten in Übereinstimmung mit Parametern, die in früheren Schritten (a), (b) und (c) erhalten wurden.

2. Verfahren nach Anspruch 1, bei dem:

   (a) der Übertragungskanal das Internet ist; und
   (b) die prädiktiv codierten Rahmen P-Rahmen sind.

3. Verfahren nach Anspruch 1 oder 2, bei dem:

   (a) die Wahrscheinlichkeit durch $q_0(1-p_{e0})/(q_0 + q_1p_{e1})$ berechnet wird, wobei $q_0$ die Wahrscheinlichkeit eines intracodierten Rahmens ist, $q_1$ die Wahrscheinlichkeit eines prädiktiv codierten Rahmens ist, $p_{e0}$ die Wahrscheinlichkeit eines verloren gegangenen übertragenen intracodierten Rahmens ist und $p_{e1}$ die Wahrscheinlichkeit eines verloren gegangenen übertragenen prädiktiv codierten Rahmens ist.

4. Videocodierungs-Steuereinheit für paketweise Übertragung, mit:

   (a) einem ersten Eingang zum Empfangen von Paketverlustraten-Daten für einen Übertragungskanal;
   (b) einem zweiten Eingang zum Empfangen von Videoparametern, wobei die Videoparameter die durchschnittliche Datenmenge intracodierter Rahmen und prädiktiv codierter Rahmen für Eingangsvideodaten mit einer Rahmenrate enthalten; und
   (c) einer Wahrscheinlichkeitsmaximierungseinrichtung, die mit dem ersten und dem zweiten Eingang gekoppelt ist, um einen Anteil von Rahmen, die intracodiert werden sollen, im Vergleich zu prädiktiv codierten Rahmen zu berechnen, indem sie eine Wahrscheinlichkeit einer korrekten Rahmenrekonstruktion unter Verwendung des ersten und des zweiten Eingangs plus einer maximalen Übertragungsbitrate maximal macht, wobei die Wahrscheinlichkeit einer korrekten Rahmenrekonstruktion eine Rate einer wiederholten Übertragung prädiktiv codierter Rahmen, die unter Verwendung der Rahmenrate plus der maximalen Übertragungsbitrate bestimmt wird, enthält.

**Revendications**

1. Procédé de codage vidéo pour une transmission mise en paquets, comprenant :

   (a) une évaluation d'un taux de perte de paquets dans un canal de transmission ;
   (b) une évaluation de la quantité moyenne de données d'images intra et d'images codées de manière prédictive pour entrer une vidéo avec une fréquence d'image ;
   (c) un calcul d'une proportion d'images devant être intra, ainsi que comparées à des images codées de manière prédictive en maximisant une probabilité de reconstruction correcte d'images à l'aide des résultats des étapes (a) et (b) ainsi qu'un débit binaire maximum de transmission, où ladite probabilité de reconstruction correcte d'images inclut un taux de transmission répétée d'images codées de manière prédictive déterminé à l'aide de ladite fréquence d'image ainsi que dudit débit binaire maximum de transmission.
   (d) un codage de la vidéo entrée selon des paramètres obtenus aux étapes précédentes (a), (b) et (c).

2. Procédé selon la revendication 1, dans lequel :

(a) ledit canal de transmission est l'Internet ; et

(b) lesdites images codées de manière prédictive sont des images P.

3. Procédé selon la revendication 1 ou 2, dans lequel :

(a) ladite probabilité est prise en tant que $q_0(1-p_{e0})$ / $(q_0 + q_1 p_{e1})$ où $q_0$ est la probabilité d'une image intra, $q_1$ est la probabilité d'une image codée de manière prédictive, $p_{e0}$ est la probabilité d'une image intra transmise perdue, et $p_{e1}$ est la probabilité d'une image codée de manière prédictive transmise perdue.

4. Un contrôleur de codage vidéo pour une transmission mise en paquets, comprenant :

(a) une première entrée pour recevoir des données de taux de perte de paquets pour un canal de transmission ;

(b) une seconde entrée pour recevoir des paramètres vidéo, lesdits paramètres vidéo comprenant la quantité moyenne de données d'images intra et d'images codées de manière prédictive pour entrer une vidéo avec une fréquence d'image ; et

(c) un maximiseur de probabilité, couplé auxdites première et seconde entrées, pour calculer une proportion d'images devant être intra, ainsi que comparées à des images codées de manière prédictive en maximisant une probabilité de reconstruction correcte d'images à l'aide desdites première et seconde entrées ainsi qu'un débit binaire maximum de transmission, où ladite probabilité de reconstruction correcte d'images inclut un taux de transmission répétée d'images codées de manière prédictive déterminé à l'aide de ladite fréquence d'image ainsi que dudit débit binaire maximum de transmission.

Figure 1

$$q_0(1-p_{e0}) + q_1(1-p_{e1}) \qquad q_0(1-p_{e0}) \qquad 1-q_0(1-p_{e0})$$

$S_0$ $\qquad$ $S_1$

$$q_0 p_{e0} + q_1 p_{e1}$$

Figure 2

video to be motion compensated:
I-frame, P-frame sizes and frame
rate

packetized channel parameters:
packet size, packet loss rate and
total bit rate

Markov chain analysis:
maximize probability of correct frame
reconstruction

set I-frame transmission rate and
P-frame repeat rate

motion compensation (I-frame rate and
P-frame rate) and transmission with P-
frame repeats

output video packets

Fig. 3 (a)

Fig. 3 (b)

Fig. 3 (c)

Fig. 3 (d)

Fig. 4 (a)

Fig. 4 (b)

Fig. 4 (c)

Fig. 4 (d)

Figure 5

```
                      ┌──────────────┐        ┌──────────┐
 input                │ motion       │◄- - - -►│ Markov   │
 video      ─────────►│ compensation │────────►│ analysis │
                      └──────────────┘        └──────────┘
                                          │
                      ┌──────────────────────────────────┐
                      │ packetized transmission channel   │◄──────┘
                      └──────────────────────────────────┘
             │
             │        ┌──────────────┐        ┌──────────────┐
             └───────►│ frame        │───────►│ concealment  │        output
                      │ reconstruction│        │              │───────►video
                      └──────────────┘        └──────────────┘
```